# EUROPEAN PATENT APPLICATION

(11) **EP 4 512 362 A1**
(43) Date of publication of application: **26.02.2025**
(21) Application number: 22934986.5
(22) Date of filing: 28.03.2022
(51) Int. Cl.: A61C 5/70, A61C 7/08, A61C 13/087, A61C 13/34, A61C 9/00, A61K 6/80

(54) **SPLINTS FOR INJECTED VENEERS**

(71) Applicant: MICRODENTAL 2006,S.L., 28939 Arroyomolinos - Madrid (ES)
(72) Inventor: MIRO NEGRILLO, Judy Catherine, 28022 Madrid (ES); PANIAGUA CUNCHILLOS, José Antonio, 28939 Arroyomolinos (ES); LOPEZ ARIAS, Tamara, 28850 Torrejón de Ardoz (ES); BLANCO DE TORRES, Javier, 28050 Madrid (ES)
(74) Representative: Urizar Anasagasti, Jesus Maria
(86) International application number: PCT/ES2022/070175
(87) International publication number: WO 2023/187227

(57) **Abstract**

The present invention relates to splints for injected veneers, which are designed based on computer-assisted planning and performed by injection using 3D printing by extending successive layers of additive material that adapts to the teeth of the patient already prepared or conditioned, said splints to be used as transfer tools for a fluid composite resin that is injected through holes (6) and subsequently photocured in the mouth over the teeth to shape a veneer thereover, two different splints being made for each patient and arch, a first splint to shape alternate teeth (D1, D3, D5, etc.) and a second splint to shape the remaining teeth (D2, D4, D6, etc.), both equipped with windows (4) that define cavities for the air between the splint and the teeth in order to allow the splint to be easily detached and removed.

## Description

### Technical field

The invention falls within the sector of dentistry; devices or methods for oral or dental hygiene and more specifically, dental prostheses.

The object of the invention are splints or prosthetic devices that are used to perform veneers injected with composite fluid based on an ideal design of the dental pieces planned by means of computer means. Each of these splints is designed with a dental treatment design software and manufactured using additive 3D printing techniques, based on an ideal design of the arch of the patient.

### State of the art

Injected composite veneers are thin sheets of resin that adhere to the visible face of the tooth to improve its aesthetic appearance, whether to correct defects such as crooked, broken, detached teeth (diastemas), stained, uneven or worn teeth. Due to their aesthetic purpose, these sheets are placed on the vestibular face of the front teeth, as they are the most visible when we smile. These are elements that are made to measure for each patient so that they look as natural as possible when placed next to the rest of the teeth.

Among existing dental veneers, those injected with fluid resin are the preferred ones in aesthetic treatments since they allow the final result to be predicted and the desired anatomical shape to be transferred from the diagnostic wax-up to a restoration on the tooth surface, predicting the aesthetic appearance to choose the color and the texture of the restorative material; establishing occlusal parameters such as modifying the position and alignment of teeth, physiological contour, lip profile, position of the incisal edge and gingival orientation. Furthermore, this technique can be performed with or without surface preparation, it ensures uniform adaptation of the restorative material and increases the potential to design more conservative preparations, since it allows dental tissue to be preserved and the final result to be predicted with greater certainty.

The dental splint is a piece that is used in dental treatments, including the shaping of a veneer over the teeth. In general, it is a rigid piece, made to measure for the patient, which adapts to their mouth and fits their teeth. Traditionally, the manufacture of a splint is carried out after a measurement and molding process; however, technology in this field has contributed to the development of splints created from a digital scan of the mouth of the patient and the computer-assisted design with CAD-CAM software that are subsequently printed using 3D printers by extending successive layers of additive material to form the previously designed splint.

3D printing of splints offers notable advantages: its production is faster, cheaper and with less discomfort for the patient. In addition, it is possible to obtain more exact pieces and therefore, that are better suited to the patient.

Document ES2392303 A1 discloses a method for the preparation of a dental correction splint and splint thus obtained, which is based on a patient record by taking an impression of their teeth, wherein said impression is processed with computer means by processing the impression image and which comprises the preparation of a splint based on the computer-treated impression, wherein externally it has the potentially expected result of the smile.

The process of manufacturing composite-injected veneers over the teeth is a process that is repeated piece by piece and involves isolating the tooth to be treated by covering the two adjacent pieces with Teflon, placing the splint, injecting the composite resin and once hardened, removing the splint and repeating the process with another piece until all the pieces to be treated (usually all the teeth in at least one arch) are completed. Being a splint that has all the teeth of the arch formed therein and mainly due to the Teflon insulator that surrounds the adjacent teeth, a dispersion of the injected material usually takes place, particularly towards the interproximal areas (space between two adjacent teeth), so subsequent work by the dentist is required, roughing and filing the excess material.

### Explanation of the invention

Based on the prior art, one objective of the present invention is to provide splints for the construction of injected veneers that prevent the dispersion of the injected material, in order to reduce the dentist's work times by up to 80%, as well as achieve greater definition of the designed teeth and interproximal areas.

In order to achieve the proposed objectives, which are mentioned in the previous section, the invention proposes splints for injected composite veneers, having the features in claim 1. For this purpose, the construction of two splints per arch is proposed, made of a flexible plastic material, which is perfectly suited to the teeth of the patient already prepared or conditioned, in order to use them as transfer tools for the fluid composite resin that is injected and photocured in the mouth over the teeth conditioned to receive the fluid composite.

The fluid resin injection process is carried out with these splints in two phases: a first phase in which the veneers are injected into alternate teeth, and a second phase in which they are injected into the teeth that are not repaired in the first phase, which significantly reduces the work time of the dentist.

As a flexible material is used in the construction of the splints, they are perfectly suited to the teeth, particularly to those which are already repaired in the first phase, this being one of the reasons for resorting to the construction of two splints per arch to facilitate the detachment and extraction thereof after use. The first splint internally exhibits the desired configuration of alternate teeth, while in the teeth that are not going to be repaired during this first phase it has a series of outwardly-bulging windows in which air remains, which allows the splint to be easily detached once the fluid composite resin has been injected and dried, since the air contained in said windows allows the void created between the splint and the tooth to be broken. The second splint presents a mold with the final configuration of all the teeth once repaired; those that had already been repaired are protected by the splint itself, given the flexibility of this mold, the remaining ones (alternating between those already repaired) are repaired by injecting fluid resin into the mold. In the case of the second splint and in order to also achieve the detachment thereof from the teeth once the fluid composite resin has dried, windows have been provided that define a small cavity for the air between the splint and the teeth repaired in the previous phase, with the purpose described above, of breaking the void between the tooth and the splint and allowing the splint to be easily detached from the tooth.

The splints of the invention are made based on computer-assisted planning, which is ideal according to the design of the smile of the patient. On this ideal design of the arch, the injection splints are made using 3D printing, by extending successive layers of additive material until the previously designed splint is formed. In this case, a type of biocompatible resins are used, more specifically a photopolymer that reacts with ultraviolet light, which is flexible and soft to the touch, with a Shore hardness of 80^{a}, which simulates the flexibility of rubber or thermoplastic polyurethane, while the combination of softness with strength allows the same to withstand bending and compression forces.

### Description of the drawings

As a complement to the present description, and for the purpose of helping to make the features of the invention more readily understandable, said description is accompanied by a set of drawings which, by way of illustration and not limitation, represent the following:

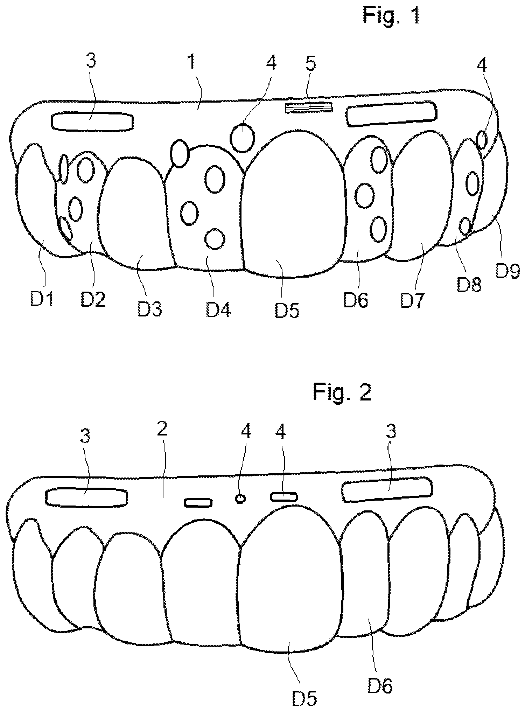

Figures 1 and 2 show respective front elevation views of the splints (1) and (2) of the invention, in this example being respectively used in the first and second phase of repair of all the teeth (D1-D9) of the upper arch.

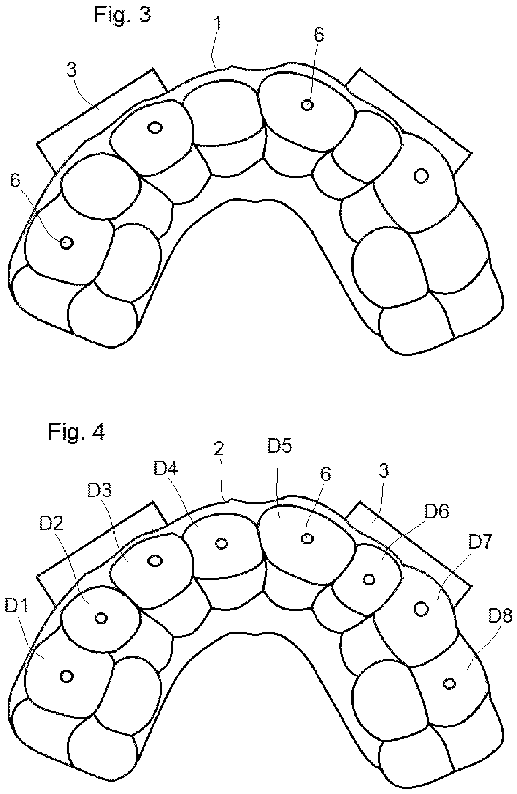

Figures 3 and 4 correspond to plan views from the lower face of the respective splints (1) and (2).

### Embodiment of the invention

As can be seen in the referenced figures, the splints (1, 2) are obtained by direct printing in a transparent material that allows a better control of the injection technique. Direct printing is related to the fact that there is no manufacturing of a positive of the teeth first and then the splints therefrom, but rather the splints are the direct result of 3D printing. For the printing thereof, a material is used that is hard to the touch and at the same time flexible, with high resistance to breakage; more specifically, it is a photopolymer that reacts with ultraviolet light, flexible and soft to the touch, with a Shore hardness of around 80^{a}, which simulates the flexibility of rubber or thermoplastic polyurethane. This material favors the technique and represents an innovation due to two reasons: Firstly, it transfers the design accurately when it is directly printed. Secondly, as it is so precise, the excess material injected after hardening is carried away with the ejection of the splint, reducing finishing times.

According to an essential feature of the invention, two splints per arch must be used for each patient, every other tooth. The first splint (1) internally exhibits a mold with at least the desired configuration of the alternate teeth (D1, D3, D5, etc.), while on the teeth (D2, D4, D6, etc.) that are not going to be repaired with this first splint (1), it exhibits a series of outwardly-bulging windows (4) that internally form air retaining spaces, which allow the air contained in said windows to break the void created between the splint and the tooth in order to allow the splint (1) to be easily detached and removed once the fluid composite resin applied (D1, D3, D5, etc.) has been injected and dried.

The second splint (2) internally exhibits a mold with the final configuration of all the teeth; those that had already been repaired (D1, D3, D5, etc.) that are protected by the splint itself (2) due to the flexibility of this mold, while the remaining teeth (D2, D4, D6, etc. ), alternated between those repaired in the first phase, are repaired by injecting fluid resin into the mold that forms said splint (2). Above the portion of the mold that defines the teeth, or over the teeth repaired in the previous phase (D1, D3, D5, etc.) it exhibits a series of windows (4) that define a cavity for the air between the splint and the teeth, in order to allow the splint (2) to be easily detached and removed once the fluid composite resin applied to the teeth (D2, D4, D6, etc.) has been injected and dried.

As indicated, these splints incorporate windows (4) of various geometric shapes that facilitate the extraction of the splints by breaking the void caused by the maximum definition of the design. In addition, these windows allow identifying the teeth where the relative insulation with Teflon for the clinical procedure is to be placed.

Both splints (1, 2) incorporate injection holes (6) made digitally during the manufacturing thereof with the thickness of the composite syringe needles, which increases control of the location of the most favorable point for the injection of the composite from the design, which improves the clinical result, as well as the precision of the diameter of the hole created, avoiding over-injection with the consequent loss of material and excess thickness of the tooth; in addition to reducing work times by avoiding the need for drilling the hole by the clinician.

In a preferred embodiment, the splint (1) that is placed first, has holes (6) only in the teeth to be repaired, for easier location of the teeth from a sagittal point of view. The splint (2) that is placed second, either has holes (6) in the teeth to be repaired, or in all of the teeth.

It is planned to provide both splints (1, 2) with at least one flap (3) at the top that will be used as handles to press on to facilitate their removal after injecting the resin that forms the veneer into the repaired teeth.

Each splint (1, 2) also includes the name of the case and/or splint number to avoid errors, or they are identified with the patient's name on the front portion (5).

Once the nature of the invention has been described, as well as a preferred exemplary embodiment, it is clear that the invention is capable of industrial application, in the indicated sector.

It is also stated for appropriate purposes that the materials, shape, size and arrangement of the elements described may be modified, as long as this does not imply an alteration of the essential features of the invention that are claimed below:

## Claims

1. Splints for injected veneers, which are designed based on computer-assisted planning and performed by injection using 3D printing by extending successive layers of additive material that adapts to the teeth of the patient already prepared or conditioned, said splints to be used as transfer tools for a fluid composite resin that is injected through holes (6) and subsequently photocured in the mouth over the teeth to shape a veneer thereover, **characterized in that** two different splints are made for each patient and arch:
- a first splint (1) which internally exhibits a mold with at least the desired configuration of the alternate teeth (D1, D3, D5, etc.), while on the teeth (D2, D4, D6, etc.) that are not going to be repaired with this first splint (1), it exhibits a series of outwardly-bulging windows (4) that internally form air retaining spaces, which will allow the air contained in said windows to break the void created between the splint and the tooth in order to allow the splint (1) to be easily detached and removed once the fluid composite resin applied (D1, D3, D5, etc.) has been injected and dried; and
- a second splint (2) which internally exhibits a mold with the final configuration of all the teeth; those that had already been repaired (D1, D3, D5, etc.) which are protected by the splint (2) due to the flexibility of this mold, while the remaining teeth (D2, D4, D6, etc.), alternated between those which are repaired in the first phase, are repaired by injecting fluid resin into the mold that forms said splint (2), which also has windows (4) that define a cavity for the air between the splint and the teeth in order to allow the splint (2) to be easily detached and removed once the fluid composite resin applied to the teeth (D2, D4, D6, etc.) has been injected and dried.

2. Splints, according to claim 1, which are manufactured from a photopolymer, flexible and soft to the touch, with a Shore hardness of around 80^{a}, which simulates the flexibility of rubber or thermoplastic polyurethane, whereby by the combination of softness with strength it is possible for the splints to be able to withstand bending and compression forces, in addition to accurately transferring the design of the dentition of the patient by being directly printed, so that the excess material injected after hardening is carried away with the ejection of the splint, reducing finishing times.

3. Splints, according to any of the preceding claims, which are performed by direct 3D printing of the previously designed splint.

4. Splints, according to claim 2, wherein the photopolymer used in its manufacture is a transparent material that allows better control of the injection technique.

5. Splints, according to any of the preceding claims, wherein the injection holes (6) are made digitally at the time of printing the splint with the thickness of the needles of the composite syringes in order to increase the control of the location of the most favorable point for the injection of the composite from the design, and to avoid over-injection with the consequent loss of material and excess thickness of the tooth.

6. Splints, according to any of the preceding claims, which incorporate at least one flap (3) that protrudes towards the front, outwards of the mouth, which is used as a handle to press in order to facilitate the removal of the splints.

7. Splints, according to any of the preceding claims, wherein
during the printing process, each of them incorporates a means of patient identification.
